# EUROPEAN PATENT SPECIFICATION

(11) **EP 4 228 056 B1**
(45) Date of publication and mention of the grant of the patent: **24.12.2025**
(21) Application number: 21958668.2
(22) Date of filing: 28.09.2021
(51) Int. Cl.: H01M 10/46, H01M 50/209, H01M 50/291, H01M 50/204, H01M 10/42, H01M 50/505, H01M 10/658

(54) **ENERGY STORAGE CONTAINER, AND METHOD AND DEVICE FOR MANUFACTURING ENERGY STORAGE CONTAINER**
ENERGIESPEICHERBEHÄLTER SOWIE VERFAHREN UND VORRICHTUNG ZUR HERSTELLUNG DES ENERGIESPEICHERBEHÄLTERS
RÉCIPIENT DE STOCKAGE D'ÉNERGIE, ET PROCÉDÉ ET DISPOSITIF DE FABRICATION DE RÉCIPIENT DE STOCKAGE D'ÉNERGIE

(43) Date of publication of application: 16.08.2023
(73) Proprietor: Contemporary Amperex Technology (Hong Kong) Limited, Central, Central And Western District (HK)
(72) Inventor: SU, Haibin, Ningde, Fujian 352100 (CN); LUO, Hao, Ningde, Fujian 352100 (CN); PENG, Haoran, Ningde, Fujian 352100 (CN); WANG, Zengzhong, Ningde, Fujian 352100 (CN)
(74) Representative: Holt, Lucy Rose
(86) International application number: PCT/CN2021/121377
(87) International publication number: WO 2023/050071

(56) References cited:
- WO-A1-2020/091721
- CN-A- 112 397 810
- CN-U- 207 684 216
- CN-U- 209 814 816
- CN-U- 210 460 079
- CN-U- 212 113 818
- CN-U- 212 113 818
- KR-A- 20180 050 085
- US-A1- 2013 065 087
- US-A1- 2018 375 072

## Description

### TECHNICAL FIELD

This application relates to the field of energy storage technologies, and in particular, to an energy storage container and a method and a device for manufacturing an energy storage container.

### BACKGROUND

In the context of increasing support for the development of new energy technologies globally, a variety of technologies related to energy storage have been widely used, among which containers as a way to store energy are widely used. To increase energy density in containers, how batteries, control components, and cooling components in the containers are properly arranged is an in-depth study topic in academic circles.

US 2013/065087 A1 discloses an energy storage container that focuses on preventing an electrical connection between the tray and connector unit of the energy storage container from being broken e.g. during an earthquake or when external impact is applied to the rack.

### SUMMARY

Embodiments of this application provide an energy storage container and a method and a device for manufacturing an energy storage container, able to effectively increase energy storage density of the energy storage container.

According to the first aspect of the invention an energy storage container according to claim 1 is provided.

Therefore, the energy storage container in the embodiments of this application is provided with multiple consecutively arranged battery compartments, and the multiple battery compartments share a same wall; or the energy storage container is provided with multiple partitions arranged in the first direction to form multiple battery compartments, so that batteries can be directly disposed in this container, discarding configuration of traditional battery cabinets. In this way, except for a box body structure of the energy storage container, it is unnecessary to additionally dispose multiple cabinets, which reduces space occupied by the original battery cabinet and increases energy density of the energy storage container. Moreover, the multiple battery compartments remain independent of each other, which can limit risks such as thermal runaway to a small space, ensuring safety performance of the energy storage container. In addition, the main control box compartment accommodating the main control box and the multiple battery compartments are disposed in the second direction to properly utilize the space of the energy storage container, improving space utilization and maintainability of the energy storage container.

In some embodiments, a side wall shared by the two adjacent battery compartments is a corrugated plate. This can prevent the spread of thermal runaway, improving overall thermal safety performance of the energy storage container.

In some embodiments, a wall of each battery compartment includes a first compartment door and a first wall intersecting with the first compartment door, where a plane in which the first compartment door is located is parallel to the first direction and the second direction, and a first seal ring is provided between the first compartment door and the first wall so that when the first compartment door is closed, the battery compartment in which the first compartment door is located is sealed.

This can prevent production of condensed water, and can also prevent rainwater and foreign objects outside the energy storage container from entering the battery compartment.

In some embodiments, an outer wall of the multiple battery compartments is a first sandwich structure, where the first sandwich structure is provided with first insulation cotton, and the outer wall of the multiple battery compartments is a wall other than the side wall shared by two adjacent battery compartments in the multiple battery compartments.

The provision of the first insulation cotton can reduce temperature difference of the battery compartments, prolong service life of the internal batteries, and prevent a large amount of condensed water produced in the battery compartment from corroding the batteries.

In some embodiments, each battery compartment is configured to accommodate multiple columns of batteries arranged in a third direction, where each of the multiple columns of batteries includes multiple batteries arranged in the second direction.

In some embodiments, the container includes multiple columns of the main control box compartments arranged in the third direction, where each column of the main control box compartments includes the multiple main control box compartments arranged consecutively in the first direction.

The main control box in the main control box compartment can implement electrical connection of multiple batteries, for example, multiple batteries can be connected in series.

In some embodiments, a support beam is provided between two adjacent ones of the multiple columns of main control box compartments, where the support beam is configured to support the multiple battery compartments.

In some embodiments, the support beam includes an upper wing plate, a web plate, and a lower wing plate, where the upper wing plate and the lower wing plate are parallel to each other, the web plate connects the upper wing plate and the lower wing plate and is perpendicular to the upper wing plate and the lower wing plate, the upper wing plate is attached to the wall shared between the multiple battery compartments and the main control box compartment, and the web plate is a side wall shared between the two adjacent columns of the main control box compartments.

The support beam of such shape can withstand great pressure from the batteries in the battery compartment, increasing bending resistance and overall structural strength of the container in a length direction.

In some embodiments, a wall of the main control box compartment includes a second compartment door and a second wall intersecting with the second compartment door, where a plane in which the second compartment door is located is parallel to the first direction and the second direction, and a second seal ring is provided between the second compartment door and the second wall so that when the second compartment door is closed, the main control box compartment is sealed, thereby preventing rainwater from entering the compartment to cause a short circuit.

The container further includes a heat management component compartment, where the multiple battery compartments and the heat management component compartment are arranged in the first direction, the heat management component compartment is configured to accommodate a heat management component, and the heat management component is configured to regulate temperature inside the container.

In some embodiments, the main control box compartment is provided with a pipe clamp, where the pipe clamp is configured to fasten a water-cooled pipe, the water-cooled pipe is connected to the heat management component, and the water-cooled pipe is disposed on a side of the main control box farther away from the multiple battery compartments, so as to regulate temperature of the main control box.

In some embodiments, the container further includes an electrical compartment, where the electrical compartment and the multiple battery compartments are arranged in the first direction.

In some embodiments, the electrical compartment is configured to accommodate at least one of the following components: a power distribution box, a general control box, a fire control box, and a fan.

In some embodiments, a wall of the electrical compartment is a second sandwich structure, and the second sandwich structure is provided with second insulation cotton. The second insulation cotton can reduce temperature difference inside the electrical compartment and prolong service life of the internal electrical device.

In some embodiments, a wall of the electrical compartment includes a fourth compartment door and a fourth wall intersecting with the fourth compartment door, where a plane in which the fourth compartment door is located is perpendicular to the first direction, and a fourth seal ring is provided between the fourth compartment door and the fourth wall so that when the fourth compartment door is closed, the electrical compartment is sealed, thereby preventing rainwater from entering the compartment to cause a short circuit.

In some embodiments, the container further includes a busbar compartment, where the busbar compartment and the main control box compartment are arranged in the first direction, the busbar compartment is configured to accommodate a busbar component, and the busbar component is configured to be electrically connected to the main control box. For example, the busbar component can be configured to connect multiple main control boxes in parallel.

In some embodiments, a side of the busbar component farther away from the main control box compartment is provided with a transparent panel, and a side of the transparent panel farther away from the busbar component is provided with a sealing panel assembly, where the sealing panel assembly is a wall of the busbar compartment, and the sealing panel assembly is configured to seal the busbar compartment to prevent external rainwater from entering inside to short-circuit the internal busbar component.

According to a second aspect, a method for manufacturing an energy storage container is provided, including: providing multiple battery compartments, where the multiple battery compartments are arranged consecutively in a first direction, each battery compartment in the multiple battery compartments is configured to accommodate multiple batteries, each battery compartment in the multiple battery compartments includes a side wall and a bracket, the bracket is disposed on the side wall, the bracket is configured to carry the batteries, and two adjacent battery compartments in the multiple battery compartments share a same side wall; and providing a main control box compartment, where the main control box compartment and the multiple battery compartments are arranged in a second direction, the second direction being perpendicular to the first direction, and the main control box compartment is configured to accommodate a main control box, the main control box being configured to electrically connect the batteries in the multiple battery compartments.

According to a third aspect, a device for manufacturing an energy storage container is provided, including modules for performing the method in the second aspect described above.

### BRIEF DESCRIPTION OF DRAWINGS

FIG. 1 is a schematic diagram of an external structure of an energy storage container according to an embodiment of this application;
FIG. 2 is a schematic diagram of an internal structure of an energy storage container according to an embodiment of this application;
FIG. 3 is a schematic cross-sectional view of an energy storage container according to an embodiment of this application;
FIG. 4 is a schematic diagram of a support beam according to an embodiment of this application;
FIG. 5 is a partially enlarged view of a main control box compartment according to an embodiment of this application;
FIG. 6 is another cross-sectional schematic view of an energy storage container according to an embodiment of this application;
FIG. 7 is a schematic diagram of a rear wall of an energy storage container according to an embodiment of this application;
FIG. 8 is a schematic diagram of a front wall of an energy storage container according to an embodiment of this application;
FIG. 9 is still another cross-sectional schematic view of an energy storage container according to an embodiment of this application;
FIG. 10 is yet another cross-sectional schematic view of an energy storage container according to an embodiment of this application;
FIG. 11 is a schematic flowchart of a method for manufacturing an energy storage mechanism according to an embodiment of this application; and
FIG. 12 is a schematic block diagram of a device for manufacturing an energy storage mechanism according to an embodiment of this application.

In the accompanying drawings, the figures are not drawn to scale.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the apparatuses or components mentioned must have specific orientations or must be constructed or manipulated according to specific orientations. These terms shall therefore not be construed as limitations on this application. In addition, the terms "first", "second", and "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all refer to the orientations as shown in the drawings, and do not limit the specific structure of this application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. A person of ordinary skill in the art can understand specific meanings of these terms in this application as appropriate to specific situations.

An energy storage container is a highly integrated energy storage device. Currently, multiple batteries are generally connected in series and put into one battery cabinet, and then multiple such battery cabinets are disposed in parallel into an energy storage container. In addition, considering transportation of the energy storage container, energy storage containers of standard dimensions are used to reduce transportation costs and transportation difficulty. However, limited by size, the energy storage container of standard dimensions can accommodate only a limited number of battery cabinets, leading to a low energy density of the energy storage container. Therefore, how energy density of the energy storage container is increased is one of the urgent problems to be resolved.

Therefore, an embodiment of this application provides an energy storage container capable of resolving the foregoing problems.

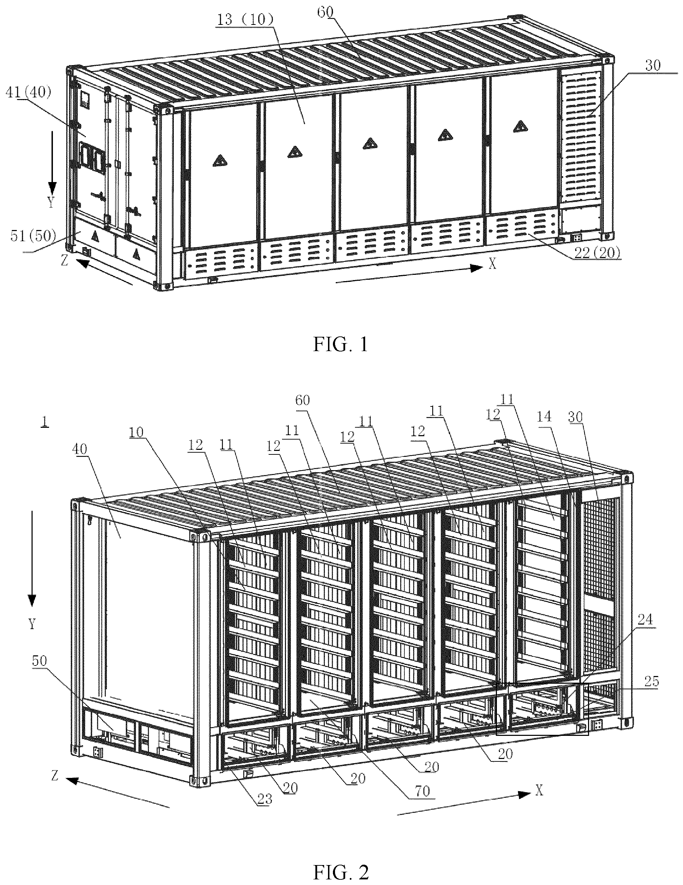

FIG. 1 is a schematic diagram of an outer surface of an energy storage container 1 according to this application, and FIG. 2 is a schematic diagram of the interior of the energy storage container 1 according to an embodiment of this application. As shown in FIG. 1 and FIG. 2, the container 1 in the embodiments of this application includes: multiple battery compartments 10 arranged consecutively in a first direction X, where each battery compartment 10 in the multiple battery compartments 10 is configured to accommodate multiple batteries, each battery compartment 10 in the multiple battery compartments includes a side wall 11 and a bracket 12, the bracket 12 is disposed on the side wall 11, the bracket 12 is configured to carry the batteries, and two adjacent battery compartments 10 in the multiple battery compartments 10 share a same side wall 11; and a main control box compartment 20, where the main control box compartment 20 and the multiple battery compartments 10 are arranged in a second direction Y, the second direction Y being perpendicular to the first direction X, and the main control box compartment 20 is configured to accommodate a main control box, the main control box being configured to electrically connect the batteries in the multiple battery compartments 10.

In the embodiments of this application, the energy storage container 1 is provided with multiple consecutively arranged battery compartments 10, with some walls shared between the multiple battery compartments 10; or the container 1 is provided with multiple partitions arranged in the first direction X to form multiple battery compartments 10, so that batteries can be directly disposed in the container 1, discarding configuration of traditional battery cabinets. In this way, except for a box body structure of the container 1, it is unnecessary to additionally dispose multiple cabinets, which reduces space occupied by the original battery cabinet and increases energy density of the container 1. Moreover, the multiple battery compartments 10 remain independent of each other, which can limit risks such as thermal runaway to a small space, ensuring safety performance of the container 1. In addition, the main control box compartment 20 accommodating the main control box and the multiple battery compartments 10 are disposed in the second direction Y, which properly utilizes the space of the container 1, improving space utilization and maintainability of the container 1.

It should be understood that the container 1 in the embodiments of this application may be a hollow structure, for example, the container 1 herein is a rectangular structure as an example. In addition, to facilitate transportation and reduce transportation costs, the energy storage container 1 in the embodiments of this application may be a container of standard dimensions. For example, a 20-foot or 40-foot container may be used, but the embodiments of this application are not limited thereto.

For ease of description, in the embodiments of this application, three directions are defined based on a rectangular container 1, where six faces of the rectangular container are six outer walls of the energy storage container 1. Specifically, as shown in FIG. 1 and FIG. 2, the first direction X in the embodiments of this application may be a length direction of the container 1, and two of the six outer walls of the container 1 that are perpendicular to the first direction X are referred to as a front wall and a rear wall according to their sequence in the first direction X as shown in FIG. 1 and FIG. 2, and accordingly, the front and back of the container 1 may also be defined. The second direction Y in the embodiments of this application may be a height direction of the container 1, and two of the six outer walls of the container 1 that are perpendicular to the second direction Y are referred to as a top wall 60 and a bottom wall according to their sequence in the second direction Y as shown in FIG. 1 and FIG. 2, and accordingly, the top and bottom of the container 1 may also be defined. The third direction Z in the embodiments of this application may be a width direction of the container 1, and two of the six outer walls of the container 1 that are perpendicular to the third direction Z are referred to as a right wall and a left wall according to their sequence in the third direction Z as shown in FIG. 1 and FIG. 2, and accordingly, the left and right of the container 1 may also be defined.

As shown in FIG. 1 and FIG. 2, the container 1 includes a heat management component compartment 30, where the multiple battery compartments 10 and the heat management component compartment 30 are arranged in the first direction X, and the heat management component compartment 30 is configured to accommodate the heat management component.

Optionally, as shown in FIG. 1 and FIG. 2, the container 1 may further include an electrical compartment 40, where the electrical compartment 40 and the multiple battery compartments 10 are arranged in the first direction X, which means that the container 1 has the electrical compartment 40, the multiple battery compartments 10, and the heat management component compartment 30 arranged in order in the first direction X.

Optionally, as shown in FIG. 1 and FIG. 2, the container 1 may further include a busbar compartment 50, where the busbar compartment 50 and the main control box compartment 20 are arranged in the first direction, the busbar compartment 50 is configured to accommodate a busbar component, and the busbar component is configured to be electrically connected to the main control box.

The following first describes the battery compartment 10 in the embodiments of this application in detail with reference to the accompanying drawings. As shown in FIG. 1 and FIG. 2, the container 1 is provided with multiple battery compartments 10 arranged consecutively in the first direction X. In the figure, only five battery compartments 10 are used as an example for description.

It should be understood that side walls 11 of the multiple battery compartments 10 in the embodiment of this application may include a side wall 11 shared by any two adjacent battery compartments 10, and the side wall 11 shared by the two adjacent battery compartments 10 may be a corrugated plate, which can prevent the spread of thermal runaway, improving overall thermal safety performance of the container 1. In addition, the side walls 11 of the multiple battery compartments 10 may further include a side wall 11 of a frontmost battery compartment 10, where the side wall 11 is a wall shared by the battery compartment 10 and the electrical compartment 40; and the side walls 11 of the multiple battery compartments 10 may further include a side wall 11 of a rearmost battery compartment 10, where this side wall 11 is a wall shared by the battery compartment 10 and the heat management component compartment 30.

As shown in FIG. 1 and FIG. 2, walls of each battery compartment 10 include a first compartment door 13 and a first wall intersecting with the first compartment door 13, where a plane in which the first compartment door 13 is located is parallel to the first direction X and the second direction Y, or the plane in which the first compartment door 13 is located is perpendicular to the third direction Z. For example, in FIG. 1 and FIG. 2, each battery compartment 10 includes two first compartment doors 13 respectively on the left and right, meaning that the batteries on the left and right sides of the battery compartment 10 can be put into and taken out by opening the two first compartment doors 13 on the left and right respectively.

It should be understood that the first wall of the rectangular battery compartment 10 intersecting with the first compartment door 13 may include four walls. The first wall may include two side walls 11 of each battery compartment 10, further includes a portion of the top wall 60 of the container 1 corresponding to each battery compartment 10, and may further include a wall 70 located below the battery compartment 10 and parallel to the top wall 60, where the wall 70 is a wall shared by the battery compartment 10 and the main control box compartment 20.

Optionally, a first seal ring 14 may be provided between the first compartment door 13 and the first wall. For example, the first seal ring 14 may be provided at a position on the first wall that intersects with the first compartment door 13 so that when the first compartment door 13 is closed, the battery compartment 10 in which the first compartment door 13 is located is sealed, to prevent production of condensed water, and prevent rainwater and foreign objects outside the container 1 from entering the battery compartment 10.

Each battery compartment 10 in the embodiment of this application is a separate compartment, and each battery compartment 10 can be configured to accommodate multiple batteries. Specifically, each battery compartment 10 can be configured to accommodate multiple columns of batteries arranged in the third direction Z, where each of the multiple columns of batteries includes multiple batteries arranged in the second direction Y. For example, considering width of the container 1, in FIG. 2, each battery compartment 10 accommodates two columns of batteries arranged in the third direction Z, each column including eight batteries arranged in the second direction Y.

Correspondingly, each battery compartment 10 includes a side wall 11 perpendicular to the first direction X and a bracket 12 provided on the side wall 11, where the bracket 12 is configured to carry the battery. For example, in FIG. 2, each battery compartment 10 includes two sets of brackets 12 in left-right mirror symmetry, each set of brackets 12 including eight pairs of brackets 12. Each set of brackets 12 is configured to carry a column of batteries, and each pair of brackets 12 includes two brackets 12 disposed opposite each other on a same horizontal plane for carrying one or more batteries. For example, a pair of brackets 12 in FIG. 2 can be configured to carry one battery, then the brackets 12 in each battery compartment 10 can be configured to carry 16 batteries, maximizing energy density of the container 1.

It should be understood that the connection manner of the batteries accommodated in the battery compartment 10 in the embodiments of this application may include series and parallel connection. For example, the batteries may be electrically connected through the main control box in the main control box compartment 20. Specifically, the container 1 in the embodiment of this application may include multiple main control box compartments 20, and the main control box in each main control box compartment 20 may be configured for electrical connection of batteries in a same battery compartment 10 or electrical connection of batteries in multiple battery compartments 10. In addition, the main control box compartment 20 in the embodiment of this application is located below the battery compartment 10, which is easy to maintain due to its low position.

For example, the container 1 may include multiple columns of such main control box compartment 20 arranged in the third direction Z, where each column of such main control box compartment 20 includes the multiple main control box compartments 20 arranged consecutively in the first direction X. Specifically, for example, as shown in FIG. 1 and FIG. 2, the container 1 includes two columns of the main control box compartment 20 arranged in the third direction Z, and each column of the main control box compartment 20 includes five main control box compartments 20 arranged consecutively in the first direction X. The number of columns of the main control box compartment 20 is consistent with the number of columns of batteries included in each battery compartment 10, and the multiple main control box compartments 20 in each column of the main control box compartment 20 are in one-to-one correspondence to the multiple battery compartments 10, to be specific, one main control box compartment 20 can correspond to a column of batteries above it. For example, one main control box compartment 20 in FIG. 2 can correspond to eight batteries in the same battery compartment 10 above it, and one battery compartment 10 correspondingly has effect on two main control box compartments 20.

Optionally, one main control box compartment 20 may correspond to a column of batteries in the same battery compartment 10 above it, and may be configured to connect this column of batteries in series. For example, each main control box compartment 20 may be provided with a main control box, where the main control box may be supported by brackets provided on the side wall of the main control box compartment 20 to fasten the main control box.

As shown in FIG. 1 and FIG. 2, walls of each main control box compartment 20 may include a second compartment door 22 and a second wall intersecting with the second compartment door 22, where a plane in which the second compartment door 22 is located is parallel to the first direction X and the second direction Y, or the second compartment door 22 is perpendicular to the third direction Z, and the second compartment door 22 may be disposed parallel to the first compartment door 13. The second wall may include two side walls of the main control box compartment 20, further including a wall 70 shared between the main control box compartment 20 and the battery compartment 10, and may further include the bottom wall of the container 1.

Optionally, a second seal ring 23 may be provided between the second compartment door 22 and the second wall so that when the second compartment door 22 is closed, the main control box compartment 20 is sealed to prevent rainwater from entering the compartment to cause a short circuit.

Optionally, as shown in FIG. 1, the second compartment door 22 of the main control box compartment 20 may be provided with louvered holes, which facilitates heat dissipation of the main control box.

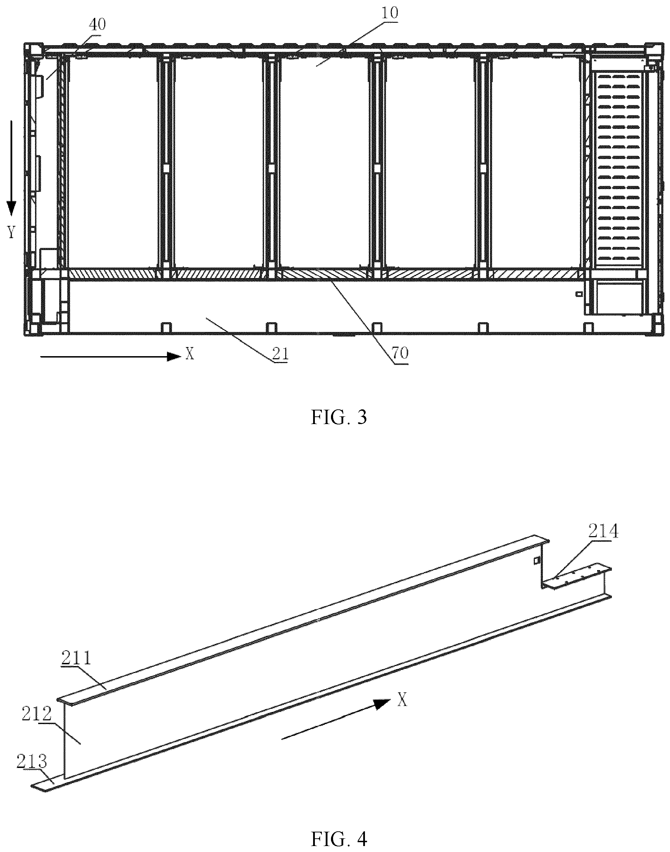

Optionally, a support beam 21 is provided between two adjacent ones of the multiple columns of main control box compartments 20, where the support beam 21 is configured to support the multiple battery compartments 10. Specifically, FIG. 3 is a cross-sectional view of the container 1 in the embodiment of this application, and the cross-section is a plane perpendicular to the third direction Z. FIG. 4 is a schematic view of the support beam 21. As shown in FIG. 3 and FIG. 4, the support beam 21 provided between two adjacent columns of the main control box compartment 20 may be an H-shaped structure. The support beam 21 includes an upper wing plate 211, a web plate 212, and a lower wing plate 213, where the upper wing plate 211 and the lower wing plate 213 are parallel to each other, and the web plate 212 connects the upper wing plate 211 and the lower wing plate 213 and is perpendicular to the upper wing plate 211 and the lower wing plate 213. Specifically, the upper wing plate 211 is attached to the wall 70 shared between the multiple battery compartments 10 and the main control box compartment 20, the web plate 212 is a side wall shared between two adjacent columns of the main control box compartments 20, and the lower wing plate 213 is attached to the bottom wall of the container 1.

Optionally, the support beam 21 may further include an avoidance region 214, where the avoidance region 214 may be configured to avoid components inside the container 1. For example, as shown in FIG. 3 and FIG. 4, the avoidance region 214 may be provided at the intersection of the main control box compartment 20 and the heat management component compartment 30 to avoid the components provided in the heat management component compartment 30, but the embodiments of this application are not limited thereto.

Optionally, the support beam 21 may be made from Q235 steel and may adopt an H-shaped structure, enabling the support beam 21 to withstand great pressure from the batteries in the battery compartment, and increasing bending resistance and overall structural strength of the container 1 in the length direction.

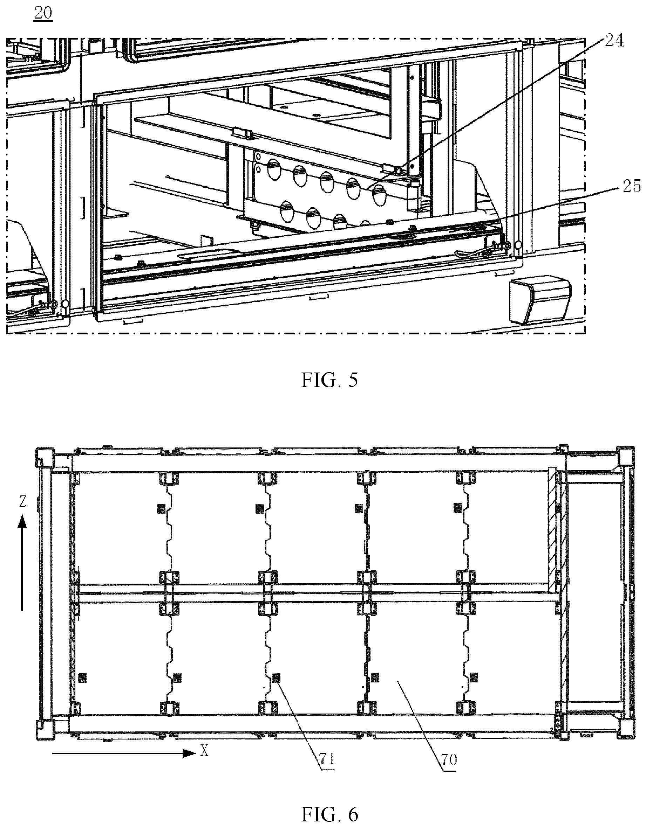

It should be understood that the main control box compartment 20 may be further provided with other structures. For example, each main control box compartment 20 may further include a pipe clamp 24 and a wire slot 25. FIG. 5 is an enlarged view of area A in FIG. 2. As shown in FIG. 5, each main control box compartment 20 is provided with a wire slot 25, where the wire slot 25 may be configured to accommodate wire harnesses. As shown in FIG. 5, each main control box compartment 20 may also be provided with a pipe clamp 24, where the pipe clamp 24 is configured to fasten a water-cooled pipe, for example, the water-cooled pipe is disposed on a side of the main control box farther away from the multiple battery compartments 10, and the water-cooled pipe may be connected to the heat management component in the heat management component compartment 20 to regulate temperature inside the main control box compartment 20.

Optionally, the bottoms of the multiple main control box compartments 20 may communicate with each other; correspondingly, the wire slots 25 in the multiple main control box compartments 20 may also communicate with each other, and the wire harnesses accommodated therein may also communicate with each other; and the water-cooled pipes fastened by the pipe clamps 24 of the multiple main control box compartments 20 may also communicate with each other. This facilitates both installation and maintenance.

FIG. 6 is another cross-sectional view of the energy storage container 1 in an embodiment of this application, and the cross-section is an upper surface of the wall 70 shared between the multiple battery compartments 10 and the main control box compartment 20. As shown in FIG. 6, the wall 70 shared between the multiple battery compartments 10 and the main control box compartment 20 may be further provided with a drain valve 71, where the drain valve 71 is configured to drain liquid from the battery compartment 10. Specifically, the liquid in the battery compartment 10 can be drained through the drain valve 71 along a drainage path provided between the battery compartments 10 and the main control box compartment 20. For example, a small amount of condensed water produced in the battery compartments 10 can be drained, and accidentally leaked cooling liquid can also be drained, preventing accumulation of condensed water and cooling liquid from damaging the batteries.

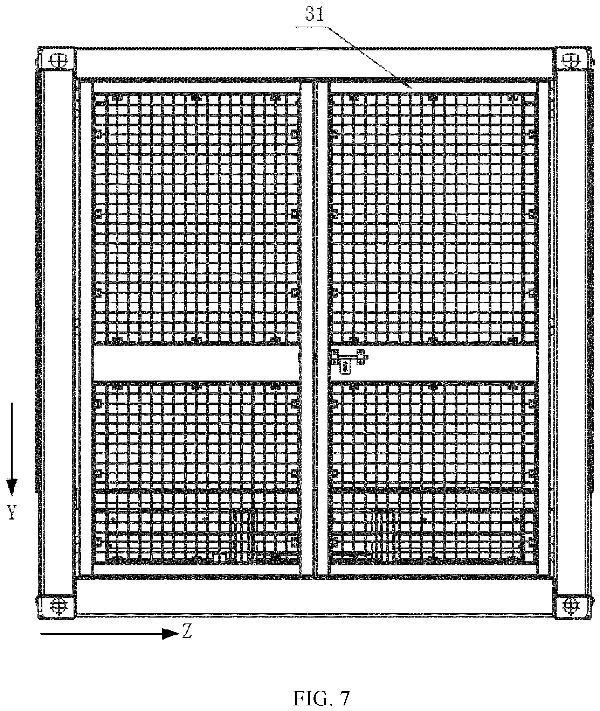

FIG. 7 is a schematic view of the rear wall of the energy storage container 1 in an embodiment of this application. With reference to FIG. 2 and FIG. 7, it can be learned that the heat management component compartment 30 is provided behind the battery compartment 10 of the container 1, and a wall of the heat management component compartment 30 includes a third compartment door 31, where the third compartment door 31 may be the rear wall of the container 1, meaning that the third compartment door 31 is perpendicular to the first direction X.

Optionally, the third compartment door 31 is provided with through holes arranged in a grid pattern to allow the heat management component compartment 30 to communicate with the outside for easy heat dissipation and maintenance.

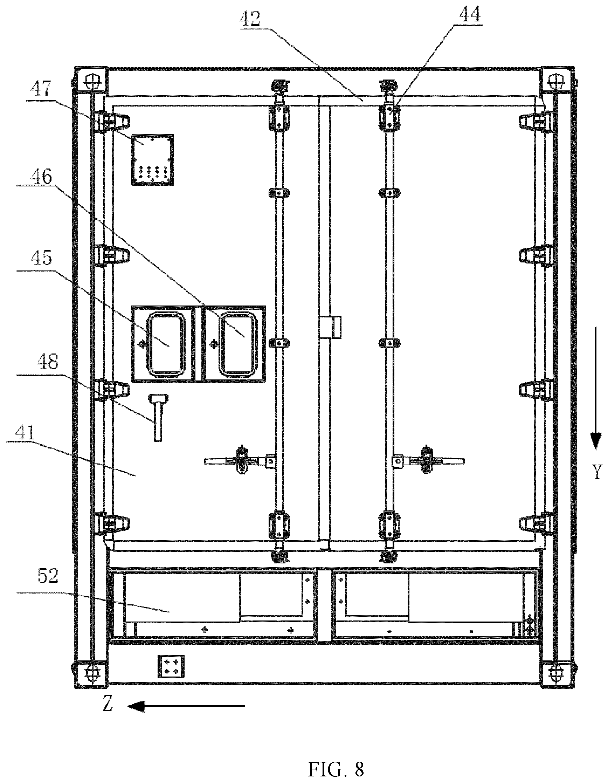

FIG. 8 is a schematic view of the front wall of the energy storage container 1 in an embodiment of this application. With reference to FIG. 1, FIG. 2, and FIG. 8, it can be learned that the electrical compartment 40 and the busbar compartment 50 are respectively provided in front of the battery compartment 10 and the main control box compartment 20 of the container 1. A wall of the electrical compartment 40 includes a fourth compartment door 41, and the busbar compartment 50 includes a sealing panel assembly 51, where the fourth compartment door 41 and the sealing panel assembly 51 may serve as the front wall of the container 1, and the fourth compartment door 41 and the sealing panel assembly 51 are both perpendicular to the first direction X.

The electrical compartment 40 in the embodiment of this application may be configured to accommodate an electrical device, for example, it may be configured to accommodate at least one of the following components: a power distribution box, a general control box, a fire control box, and a fan.

As shown in FIG. 8, the wall of the electrical compartment 40 includes the fourth compartment door 41 and a fourth wall intersecting with the fourth compartment door 41, where the fourth wall may include a portion of the top wall 60 of the container 1, a portion of the wall 70, and two side walls perpendicular to the third direction Z. A fourth seal ring 42 is provided between the fourth compartment door 41 and the fourth wall so that when the fourth compartment door 41 is closed, the electrical compartment 40 is sealed. Specifically, the fourth compartment door 41 may be further provided with a long rod lock 44. When the door is closed, the long rod lock 44 presses the fourth compartment door 41, so that the fourth compartment door 41 is tightly attached to the box body through the fourth seal ring 42 to achieve a sealing effect, preventing rainwater from entering the electrical compartment 40 to short-circuit the internal electrical device.

Optionally, the fourth compartment door 41 may be further provided with other components. For example, the fourth compartment door 41 is provided with at least one of the following structures: an emergency hand pull box 45, an emergency stop switch 46, an audiovisual alarm 47, and a hand hammer 48. As shown in FIG. 8, the fourth compartment door 41 is designed with a window for the emergency hand pull box 45 and a window for the emergency stop switch 46 respectively for installing the emergency hand pull box 45 and the emergency stop switch 46 to facilitate emergency stop without opening the compartment door. The fourth compartment door 41 is designed with a window for the audiovisual alarm 47 for installing the audiovisual alarm 47, which can be used to send out alarms in the case of emergency. The fourth compartment door 41 is designed with the hand hammer 48 that can be used to smash open the panels of the window of the emergency stop switch 46 and the window of the emergency hand pull box 45 for emergency stop in the case of emergency.

The busbar compartment 50 is below the electrical compartment 40. The busbar compartment may be configured for mounting the busbar component. For example, a high voltage wire from the main control box compartment 20 may be connected to the busbar component through the wire slot 24 at the bottom of the box body. The busbar component, for example, may implement parallel connection of the multiple main control boxes.

Optionally, in an embodiment of this application, a side of the busbar component of the busbar compartment 50 farther away from the main control box compartment 20 may be provided with a transparent panel 52. For example, the transparent panel 52 made of acrylic may be designed directly in front of the busbar component to prevent accidental touch by people and entry of foreign objects. As shown in FIG. 1, the sealing panel assembly 51 is directly in front of the transparent panel 52, and the sealing panel assembly 51 has a seal ring that can be fastened to the box body through bolting or the like to seal the busbar compartment 50, which can prevent rainwater from entering inside to cause a short circuit.

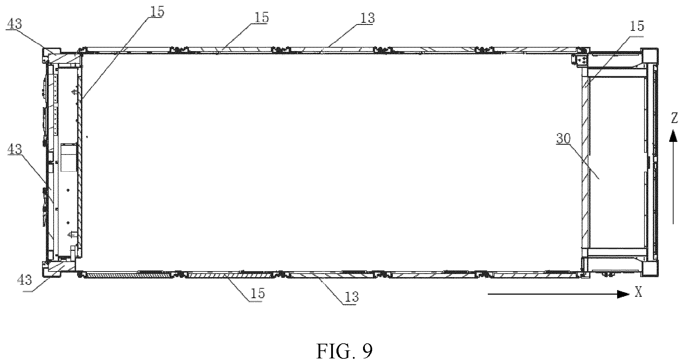

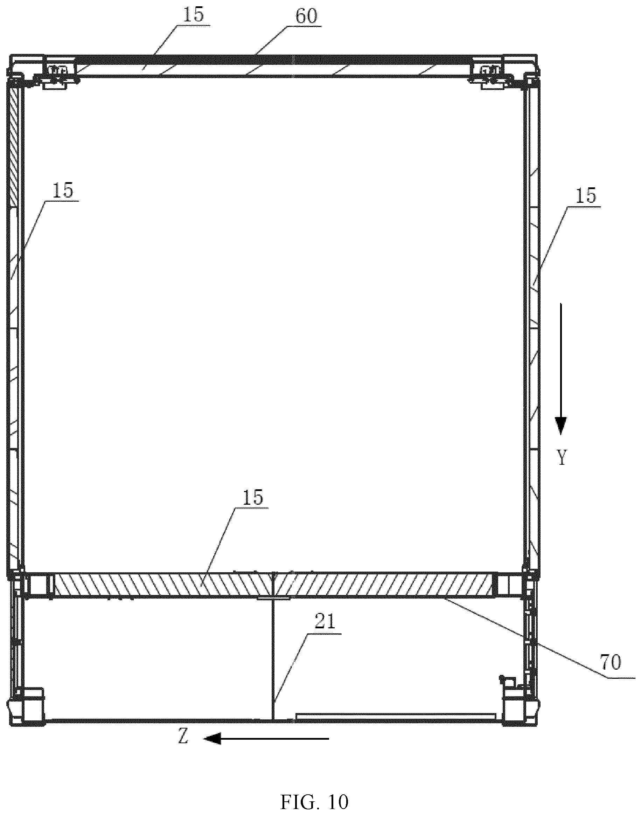

FIG. 9 is still another cross-sectional view of the energy storage container 1 in an embodiment of this application embodiment, and the cross-section may be any plane parallel to the top wall 60 of the container within the battery compartment 10. FIG. 10 is yet another cross-sectional view of the energy storage container 1 in an embodiment of this application, and the cross-section may be any plane perpendicular to the first direction X within any one of the battery compartments 10. Neither FIG. 9 nor FIG. 10 shows the side wall 11 shared by the multiple battery compartments 10. As shown in FIG. 9 and FIG. 10, the container 1 uses a sandwich structure in many places, and insulation cotton is provided in the middle of the sandwich structure to maintain temperature.

For example, as shown in FIG. 9 and FIG. 10, the outer wall of the multiple battery compartments 10 in the embodiment of this application is a first sandwich structure, where the first sandwich structure is provided with first insulation cotton 15, and the outer wall of the multiple battery compartments 10 is a wall other than the side wall 11 shared by two adjacent battery compartments 10 in the multiple battery compartments 10. Specifically, the outer walls of the multiple battery compartments 10 may include a top wall 60, a wall 70 shared with the main control box compartment 20, and a first compartment door 13, and may further include a wall shared between the battery compartments 10 and the electrical compartment 40 and a wall shared between the battery compartments 10 and the heat management component 30. The first insulation cotton 15 may be installed between two layers of sheet metal to form the first sandwich structure, which can reduce temperature difference in the battery compartment 10, prolong service life of the internal batteries, and prevent a large amount of condensed water produced in the battery compartment 10 from corroding the batteries.

In another example, as shown in FIG. 9 and FIG. 10, a wall of the electrical compartment 40 in the embodiment of this application is a second sandwich structure, where the second sandwich structure is provided with second insulation cotton 43. The wall of the electrical compartment 40 may include all six walls of the rectangular electrical compartment 40, and all or some of the six walls may be configured as the second sandwich structure. The second insulation cotton 43 may also be installed between two layers of sheet metal to form the second sandwich structure, which can reduce temperature difference inside the electrical compartment 40 and prolong service life of the internal electrical device.

The foregoing describes the energy storage container in the embodiments of this application, and the following describes a method and a device for manufacturing the energy storage container in the embodiments of this application. For content that is not described in detail, reference may be made to the foregoing embodiments.

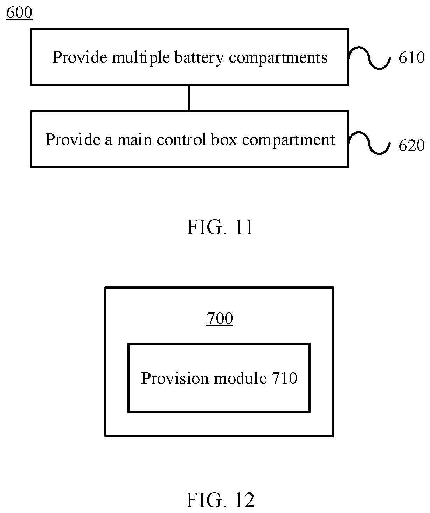

FIG. 11 is a schematic flowchart of a method 600 for manufacturing an energy storage container according to an embodiment of this application. As shown in FIG. 11, the method 600 may include: S610, providing multiple battery compartments 10, where the multiple battery compartments 10 are arranged consecutively in a first direction, each battery compartment 10 in the multiple battery compartments 10 is configured to accommodate multiple batteries, each battery compartment 10 in the multiple battery compartments includes a side wall 11 and a bracket 12, the bracket 12 is disposed on the side wall 11, the bracket 12 is configured to carry the batteries, and two adjacent battery compartments 10 in the multiple battery compartments 10 share a same side wall 11; and S620, providing a main control box compartment 20, where the main control box compartment 20 and the multiple battery compartments 10 are arranged in a second direction, the second direction being perpendicular to the first direction, and the main control box compartment 20 is configured to accommodate a main control box, the main control box being configured to electrically connect the batteries in the multiple battery compartments 10.

FIG. 12 is a schematic block diagram of a device 700 for manufacturing an energy storage container according to an embodiment of this application. As shown in FIG. 12, the device 700 may include a provision module 710. The provision module 710 is configured to: provide multiple battery compartments 10, where the multiple battery compartments 10 are arranged consecutively in a first direction, each battery compartment 10 in the multiple battery compartments 10 is configured to accommodate multiple batteries, each battery compartment 10 in the multiple battery compartments includes a side wall 11 and a bracket 12, the bracket 12 is disposed on the side wall 11, the bracket 12 is configured to carry the batteries, and two adjacent battery compartments 10 in the multiple battery compartments 10 share a same side wall 11; and provide a main control box compartment 20, where the main control box compartment 20 and the multiple battery compartments 10 are arranged in a second direction, the second direction being perpendicular to the first direction, and the main control box compartment 20 is configured to accommodate a main control box, the main control box being configured to electrically connect the batteries in the multiple battery compartments 10.

## Claims

1. An energy storage container (1), comprising:
multiple battery compartments (10) arranged consecutively in a first direction (X), wherein each battery compartment (10) in the multiple battery compartments (10) is configured to accommodate multiple batteries, each battery compartment (10) comprises a side wall (11) and a bracket (12), the bracket (12) is disposed on the side wall (11), the bracket (12) is configured to carry the battery, and two adjacent battery compartments (10) in the multiple battery compartments (10) share a same side wall (11);
a main control box compartment (20), wherein the main control box compartment (20) and the multiple battery compartments (10) are arranged in a second direction (Y), the second direction (Y) being perpendicular to the first direction (X), and the main control box compartment (20) is configured to accommodate a main control box, the main control box being configured to electrically connect the batteries in the multiple battery compartments (10);
**characterised in that**
the container (1) further comprising:
a heat management component compartment (30), wherein the multiple battery compartments (10) and the heat management component compartment (30) are arranged in the first direction (X), and the heat management component compartment (30) is configured to accommodate a heat management component.

2. The container (1) according to claim 1, wherein the side wall (11) shared by the two adjacent battery compartments (10) is a corrugated plate.

3. The container (1) according to claim 1 or 2, wherein a wall of each battery compartment (10) comprises a first compartment door (13) and a first wall intersecting with the first compartment door (13), wherein a plane in which the first compartment door (13) is located is parallel to the first direction (X) and the second direction (Y), and
a first seal ring (14) is provided between the first compartment door (13) and the first wall so that when the first compartment door (13) is closed, the battery compartment (10) in which the first compartment door (13) is located is sealed.

4. The container (1) according to any one of claims 1 to 3, wherein an outer wall of the multiple battery compartments (10) is a first sandwich structure, wherein the first sandwich structure is provided with first insulation cotton (15), and the outer wall of the multiple battery compartments (10) is a wall other than the side wall (11) shared by two adjacent battery compartments (10) in the multiple battery compartments (10).

5. The container (1) according to any one of claims 1 to 4, wherein a wall (70) shared between the multiple battery compartments (10) and the main control box compartment (20) is provided with a drain valve (71), wherein the drain valve (71) is configured to drain liquid from the battery compartments (10).

6. The container (1) according to any one of claims 1 to 5, wherein each battery compartment (10) is configured to accommodate multiple columns of batteries arranged in a third direction (Z), wherein each of the multiple columns of batteries comprises multiple batteries arranged in the second direction (Y).

7. The container (1) according to claim 6, wherein the container (1) comprises multiple columns of the main control box compartments (20) arranged in the third direction (Z), wherein each column of the main control box compartments (20) comprises the multiple main control box compartments (20) arranged consecutively in the first direction (X).

8. The container (1) according to claim 7, wherein a support beam (21) is provided between two adjacent ones of the multiple columns of main control box compartments (20), wherein the support beam (21) is configured to support the multiple battery compartments (10), optionally, wherein the support beam (21) comprises an upper wing plate (211), a web plate (212), and a lower wing plate (213), wherein the upper wing plate (211) and the lower wing plate (213) are parallel to each other, the web plate (212) connects the upper wing plate (211) and the lower wing plate (213) and is perpendicular to the upper wing plate (211) and the lower wing plate (213),
the upper wing plate (211) is attached to the wall (70) shared between the multiple battery compartments (10) and the main control box compartment (20), and
the web plate (212) is a side wall shared between two adjacent columns of the main control box compartments (20).

9. The container (1) according to any one of claims 1 to 8, wherein a wall of the main control box compartment (20) comprises a second compartment door (22) and a second wall intersecting with the second compartment door (22), wherein a plane in which the second compartment door (22) is located is parallel to the first direction (X) and the second direction (Y), and
a second seal ring (23) is provided between the second compartment door (22) and the second wall so that when the second compartment door (22) is closed, the main control box compartment (20) is sealed.

10. The container (1) according to any one of claims 1 to 9,
wherein the main control box compartment (20) is provided with a pipe clamp (24), wherein the pipe clamp (24) is configured to fasten a water-cooled pipe, the water-cooled pipe is connected to the thermal management component, and the water-cooled pipe is disposed on a side of the main control box farther away from the multiple battery compartments (10).

11. The container (1) according to any one of claims 1 to 10, wherein the container (1) further comprises:
an electrical compartment (40), wherein the electrical compartment (40) and the multiple battery compartments (10) are arranged in the first direction (X), optionally, wherein the electrical compartment (40) is configured to accommodate at least one of the following components: a power distribution box, a general control box, a fire control box, and a fan.

12. The container (1) according to claim 11, wherein a wall of the electrical compartment (40) is a second sandwich structure, wherein the second sandwich structure is provided with second insulation cotton (43) and/or, wherein the wall of the electrical compartment (40) comprises a fourth compartment door (41) and a fourth wall intersecting with the fourth compartment door (41), wherein a plane in which the fourth compartment door (41) is located is perpendicular to the first direction (X), and
a fourth seal ring (42) is provided between the fourth compartment door (41) and the fourth wall so that when the fourth compartment door (41) is closed, the electrical compartment (40) is sealed.

13. The container (1) according to any one of claims 1 to 12, wherein the container (1) further comprises:
a busbar compartment (50), wherein the busbar compartment (50) and the main control box compartment (20) are arranged in the first direction (X), the busbar compartment (50) is configured to accommodate a busbar component, and the busbar component is configured to be electrically connected to the main control box, optionally, wherein a side of the busbar component farther away from the main control box compartment (20) is provided with a transparent panel (52), and a side of the transparent panel (52) farther away from the busbar component is provided with a sealing panel assembly (51), wherein the sealing panel assembly (51) is a wall of the busbar compartment (50), and the sealing panel assembly (51) is configured to seal the busbar compartment (50).

## Patentansprüche

1. Energiespeicherbehälter (1), umfassend:
mehrere Batteriefächer (10), die in einer ersten Richtung (X) hintereinander angeordnet sind, wobei jedes Batteriefach (10) in den mehreren Batteriefächern (10) konfiguriert ist, um mehrere Batterien aufzunehmen, jedes Batteriefach (10) eine Seitenwand (11) und eine Halterung (12) umfasst, die Halterung (12) an der Seitenwand (11) angeordnet ist, die Halterung (12) konfiguriert ist, um die Batterie zu tragen, und zwei angrenzende Batteriefächer (10) in den mehreren Batteriefächern (10) eine gleiche Seitenwand (11) gemeinsam nutzen;
ein Hauptsteuerungskastenfach (20), wobei das Hauptsteuerungskastenfach (20) und die mehreren Batteriefächer (10) in einer zweiten Richtung (Y) angeordnet sind, wobei die zweite Richtung (Y) senkrecht zur ersten Richtung (X) ist, und das Hauptsteuerungskastenfach (20) konfiguriert ist, um einen Hauptsteuerungskasten aufzunehmen, wobei der Hauptsteuerungskasten konfiguriert ist, um die Batterien in den mehreren Batteriefächern (10) elektrisch zu verbinden;
**dadurch gekennzeichnet, dass**
der Behälter (1) ferner umfasst:
ein Wärmemanagementkomponentenfach (30), wobei die mehreren Batteriefächer (10) und das Wärmemanagementkomponentenfach (30) in der ersten Richtung (X) angeordnet sind, und das Wärmemanagementkomponentenfach (30) konfiguriert ist, um eine Wärmemanagementkomponente aufzunehmen.

2. Behälter (1) nach Anspruch 1, wobei die von den zwei angrenzenden Batteriefächern (10) gemeinsam genutzte Seitenwand (11) ein gewelltes Blech ist.

3. Behälter (1) nach Anspruch 1 oder 2, wobei eine Wand jedes Batteriefachs (10) eine erste Fachtür (13) und eine erste Wand umfasst, welche die erste Fachtür (13) schneidet, wobei eine Ebene, in der sich die erste Fachtür (13) befindet, parallel zur ersten Richtung (X) und zur zweiten Richtung (Y) ist, und
ein erster Dichtungsring (14) zwischen der ersten Fachtür (13) und der ersten Wand bereitgestellt ist, so dass, wenn die erste Fachtür (13) geschlossen ist, das Batteriefach (10), in dem die erste Fachtür (13) angeordnet ist, abgedichtet ist.

4. Behälter (1) nach einem der Ansprüche 1 bis 3, wobei eine Außenwand der mehreren Batteriefächer (10) eine erste Sandwichstruktur ist, wobei die erste Sandwichstruktur mit erster Isolierwatte (15) versehen ist und die Außenwand der mehreren Batteriefächer (10) eine andere Wand als die Seitenwand (11) ist, die von zwei angrenzenden Batteriefächern (10) in den mehreren Batteriefächern (10) gemeinsam genutzt wird.

5. Behälter (1) nach einem der Ansprüche 1 bis 4, wobei eine Wand (70), die von den mehreren Batteriefächern (10) und dem Hauptsteuerungskastenfach (20) gemeinsam genutzt wird, mit einem Ablassventil (71) versehen ist, wobei das Ablassventil (71) konfiguriert ist, um Flüssigkeit aus den Batteriefächern (10) abzulassen.

6. Behälter (1) nach einem der Ansprüche 1 bis 5, wobei jedes Batteriefach (10) konfiguriert ist, um mehrere Spalten von Batterien aufzunehmen, die in einer dritten Richtung (Z) angeordnet sind, wobei jede der mehreren Spalten von Batterien mehrere Batterien umfasst, die in der zweiten Richtung (Y) angeordnet sind.

7. Behälter (1) nach Anspruch 6, wobei der Behälter (1) mehrere Spalten der Hauptsteuerungskastenfächer (20) umfasst, die in der dritten Richtung (Z) angeordnet sind, wobei jede Spalte der Hauptsteuerungskastenfächer (20) die mehreren Hauptsteuerungskastenfächer (20) umfasst, die in der ersten Richtung (X) hintereinander angeordnet sind.

8. Behälter (1) nach Anspruch 7, wobei ein Stützbalken (21) zwischen zwei angrenzenden der mehreren Spalten von Hauptsteuerungskastenfächern (20) bereitgestellt ist, wobei der Stützbalken (21) konfiguriert ist, um die mehreren Batteriefächer (10) zu stützen, optional, wobei der Stützbalken (21) eine obere Flügelplatte (211), eine Stegplatte (212) und eine untere Flügelplatte (213) umfasst, wobei die obere Flügelplatte (211) und die untere Flügelplatte (213) parallel zueinander sind, die Stegplatte (212) die obere Flügelplatte (211) und die untere Flügelplatte (213) verbindet und senkrecht zu der oberen Flügelplatte (211) und der unteren Flügelplatte (213) ist,
die obere Flügelplatte (211) an der Wand (70) befestigt ist, die von den mehreren Batteriefächern (10) und dem Hauptsteuerungskastenfach (20) gemeinsam genutzt wird, und
die Stegplatte (212) eine Seitenwand ist, die von zwei angrenzenden Spalten der Hauptsteuerungskastenfächer (20) gemeinsam genutzt wird.

9. Behälter (1) nach einem der Ansprüche 1 bis 8, wobei eine Wand des Hauptsteuerungskastenfachs (20) eine zweite Fachtür (22) und eine zweite Wand umfasst, welche die zweite Fachtür (22) schneidet, wobei eine Ebene, in der sich die zweite Fachtür (22) befindet, parallel zur ersten Richtung (X) und zur zweiten Richtung (Y) ist, und
ein zweiter Dichtungsring (23) zwischen der zweiten Fachtür (22) und der zweiten Wand bereitgestellt ist, so dass, wenn die zweite Fachtür (22) geschlossen ist, das Hauptsteuerungskastenfach (20) abgedichtet ist.

10. Behälter (1) nach einem der Ansprüche 1 bis 9,
wobei das Hauptsteuerungskastenfach (20) mit einer Rohrschelle (24) versehen ist, wobei die Rohrschelle (24) konfiguriert ist, um ein wassergekühltes Rohr zu befestigen, wobei das wassergekühlte Rohr mit der Wärmemanagementkomponente verbunden ist, und wobei das wassergekühlte Rohr auf einer Seite des Hauptsteuerungskastens angeordnet ist, die weiter von den mehreren Batteriefächern (10) entfernt ist.

11. Behälter (1) nach einem der Ansprüche 1 bis 10, wobei der Behälter (1) ferner umfasst:
ein Elektrofach (40), wobei das Elektrofach (40) und die mehreren Batteriefächer (10) in der ersten Richtung (X) angeordnet sind, optional, wobei das Elektrofach (40) konfiguriert ist, um mindestens eines von einem Stromverteilerkasten, einem Hauptsteuerungskasten, einem Feuersteuerungskasten und einem Lüfter aufzunehmen.

12. Behälter (1) nach Anspruch 11, wobei eine Wand des Elektrofachs (40) eine zweite Sandwichstruktur ist, wobei die zweite Sandwichstruktur mit zweiter Isolierwatte (43) versehen ist und/oder wobei die Wand des Elektrofachs (40) eine vierte Fachtür (41) und eine vierte Wand umfasst, welche die vierte Fachtür (41) schneidet, wobei eine Ebene, in der sich die vierte Fachtür (41) befindet, senkrecht zur ersten Richtung (X) ist, und
ein vierter Dichtungsring (42) zwischen der vierten Fachtür (41) und der vierten Wand bereitgestellt ist, so dass, wenn die vierte Fachtür (41) geschlossen ist, das Elektrofach (40) abgedichtet ist.

13. Behälter (1) nach einem der Ansprüche 1 bis 12, wobei der Behälter (1) ferner umfasst:
ein Sammelschienenfach (50), wobei das Sammelschienenfach (50) und das Hauptsteuerungskastenfach (20) in der ersten Richtung (X) angeordnet sind, das Sammelschienenfach (50) konfiguriert ist, um eine Sammelschienenkomponente aufzunehmen, und die Sammelschienenkomponente konfiguriert ist, um mit dem Hauptsteuerungskasten elektrisch verbunden zu werden, optional, wobei eine Seite der Sammelschienenkomponente, die weiter von dem Hauptsteuerungskastenfach (20) entfernt ist, mit einer transparenten Platte (52) versehen ist, und eine Seite der transparenten Platte (52), die weiter von der Sammelschienenkomponente entfernt ist, mit einer Dichtungsplattenanordnung (51) versehen ist, wobei die Dichtungsplattenanordnung (51) eine Wand des Sammelschienenfachs (50) ist, und die Dichtungsplattenanordnung (51) konfiguriert ist, um das Sammelschienenfach (50) abzudichten.

## Revendications

1. Container de stockage d'énergie (1), comprenant :
de multiples compartiments de batterie (10) agencés consécutivement dans une première direction (X), dans lequel chaque compartiment de batterie (10) des multiples compartiments de batterie (10) est conçu pour recevoir de multiples batteries, chaque compartiment de batterie (10) comprend une paroi latérale (11) et un support (12), le support (12) est disposé sur la paroi latérale (11), le support (12) est conçu pour porter la batterie, et deux compartiments de batterie (10) adjacents des multiples compartiments de batterie (10) partagent une même paroi latérale (11) ;
un compartiment de boîtier de commande principal (20), dans lequel le compartiment de boîtier de commande principal (20) et les multiples compartiments de batterie (10) sont agencés dans une deuxième direction (Y), la deuxième direction (Y) étant perpendiculaire à la première direction (X), et le compartiment de boîtier de commande principal (20) est conçu pour recevoir un boîtier de commande principal, le boîtier de commande principal étant conçu pour connecter électriquement les batteries des multiples compartiments de batterie (10) ;
**caractérisé en ce que** le container (1) comprend en outre :
un compartiment de composant de gestion de la chaleur (30), dans lequel les multiples compartiments de batterie (10) et le compartiment de composant de gestion de la chaleur (30) sont agencés dans la première direction (X), et le compartiment de composant de gestion de la chaleur (30) est conçu pour recevoir un composant de gestion de la chaleur.

2. Container (1) selon la revendication 1, dans lequel la paroi latérale (11) partagée par les deux compartiments de batterie (10) adjacents est une tôle ondulée.

3. Container (1) selon la revendication 1 ou 2, dans lequel une paroi de chaque compartiment de batterie (10) comprend une première porte de compartiment (13) et une première paroi s'intersectant avec la première porte de compartiment (13), un plan dans lequel se situe la première porte de compartiment (13) étant parallèle à la première direction (X) et la deuxième direction (Y), et
un premier anneau d'étanchéité (14) est fourni entre la première porte de compartiment (13) et la première paroi de telle sorte que quand la première porte de compartiment (13) est fermée, le compartiment de batterie (10) dans lequel se situe la première porte de compartiment (13) soit scellé.

4. Container (1) selon l'une quelconque des revendications 1 à 3, dans lequel une paroi externe des multiples compartiments de batterie (10) constitue une première structure de type sandwich, la première structure de type sandwich étant pourvue d'un premier coton d'isolation (15), et une paroi externe des multiples compartiments de batterie (10) est une paroi autre que la paroi latérale (11) partagée par deux compartiments de batterie (10) adjacents des multiples compartiments de batterie (10).

5. Container (1) selon l'une quelconque des revendications 1 à 4, dans lequel une paroi (70) partagée entre les multiples compartiments de batterie (10) et le compartiment de boîtier de commande principal (20) est pourvu d'une vanne de drainage (71), la vanne de drainage (71) étant conçue pour drainer un liquide depuis les compartiments de batterie (10).

6. Container (1) selon l'une quelconque des revendications 1 à 5, dans lequel chaque compartiment de batterie (10) est conçu pour recevoir de multiples colonnes de batterie agencées dans une troisième direction (Z), chacune des multiples colonnes de batteries comprenant de multiples batteries agencées dans la deuxième direction (Y).

7. Container (1) selon la revendication 6, dans lequel le container (1) comprend de multiples colonnes des compartiments de boîtier de commande principal (20) agencées dans la troisième direction (Z), chaque colonne des compartiments de boîtier de commande principal (20) comprenant les multiples compartiments de boîtier de commande principal (20) agencés consécutivement dans la première direction (X).

8. Container (1) selon la revendication 7, dans lequel une poutre de support (21) est fournie entre deux colonnes adjacentes des multiples colonnes de compartiments de boîtier de commande principal (20), la poutre de support (21) étant conçue pour supporter les multiples compartiments de batterie (10), éventuellement, la poutre de support (21) comprenant une plaque d'aile supérieure (211), une plaque d'âme (212), et une plaque d'aile inférieure (213), la plaque d'aile supérieure (211) et la plaque d'aile inférieure (213) étant parallèles l'une à l'autre, la plaque d'âme (212) reliant la plaque d'aile supérieure (211) et la plaque d'aile inférieure (213) et étant perpendiculaire à la plaque d'aile supérieure (211) et la plaque d'aile inférieure (213),
la plaque d'aile supérieure (211) est fixée à la paroi (70) partagée entre les multiples compartiments de batterie (10) et le compartiment de boîtier de commande principal (20), et
la plaque d'âme (212) est une paroi latérale partagée entre deux colonnes adjacentes des compartiments de boîtier de commande principal (20).

9. Container (1) selon l'une quelconque des revendications 1 à 8, dans lequel une paroi du compartiment de boîtier de commande principal (20) comprend une deuxième porte de compartiment (22) et une deuxième paroi s'intersectant avec la deuxième porte de compartiment (22), un plan dans lequel se situe la deuxième porte de compartiment (22) étant parallèle à la première direction (X) et la deuxième direction (Y), et
un deuxième anneau d'étanchéité (23) est fourni entre la deuxième porte de compartiment (22) et la deuxième paroi de telle sorte que quand la deuxième porte de compartiment (22) est fermée, le compartiment de boîtier de commande principal (20) soit scellé.

10. Container (1) selon l'une quelconque des revendications 1 à 9,
dans lequel le compartiment de boîtier de commande principal (20) est pourvu d'un dispositif de serrage de tuyau (24), le dispositif de serrage de tuyau (24) étant conçu pour fixer un tuyau refroidi à l'eau, le tuyau refroidi à l'eau étant relié au composant de gestion de la chaleur, et le tuyau refroidi à l'eau étant disposé sur un côté du boîtier de commande principal plus éloigné des multiples compartiments de batterie (10).

11. Container (1) selon l'une quelconque des revendications 1 à 10, dans lequel le container (1) comprend en outre :
un compartiment électrique (40), le compartiment électrique (40) et les multiples compartiments de batterie (10) étant agencés dans la première direction (X), éventuellement, le compartiment électrique (40) étant conçu pour recevoir au moins l'un des composants suivants : un boîtier de distribution d'alimentation, un boîtier de commande général, un boîtier de lutte contre le feu, et un ventilateur.

12. Container (1) selon la revendication 11, dans lequel une paroi du compartiment électrique (40) est une deuxième structure de type sandwich, la deuxième structure de type sandwich étant pourvue d'un deuxième coton d'isolation (43) et/ou la paroi du compartiment électrique (40) comprenant une quatrième porte de compartiment (41) et une quatrième paroi s'intersectant avec la quatrième porte de compartiment (41), un plan dans lequel se situe la quatrième porte de compartiment (41) étant perpendiculaire à la première direction (X), et
un quatrième anneau d'étanchéité (42) est fourni entre la quatrième porte de compartiment (41) et la quatrième paroi de telle sorte que quand la quatrième porte de compartiment (41) est fermée, le compartiment électrique (40) soit scellé.

13. Container (1) selon l'une quelconque des revendications 1 à 12, dans lequel le container (1) comprend en outre :
un compartiment de barre omnibus (50), le compartiment de barre omnibus (50) et le compartiment de boîtier de commande principal (20) étant agencés dans la première direction (X), le compartiment de barre omnibus (50) étant conçu pour recevoir un composant de barre omnibus, et le composant de barre omnibus étant conçu pour être électriquement relié au boîtier de commande principal, éventuellement, un côté du composant de barre omnibus plus éloigné du compartiment de boîtier de commande principal (20) étant pourvu d'un panneau transparent (52), et un côté du panneau transparent (52) plus éloigné du composant de barre omnibus étant pourvu d'un ensemble panneau d'étanchéité (51), l'ensemble panneau d'étanchéité (51) étant une paroi du compartiment de barre omnibus (50), et l'ensemble panneau d'étanchéité (51) étant conçu pour sceller le compartiment de barre omnibus (50).
